# EUROPÄISCHE PATENTANMELDUNG

(11) **EP 2 518 356 A1**
(43) Veröffentlichungstag der Anmeldung: **31.10.2012**
(21) Anmeldenummer: 12165497.4
(22) Anmeldetag: 25.04.2012
(51) Int. Cl.: F16C 33/66

(54) **Lageranordnung**

(30) Priorität: 29.04.2011 DE 102011017766
(71) Anmelder: Aktiebolaget SKF, 41 550 Göteborg (SE)
(72) Erfinder: Schweitzer, Ferdinand, 3352 St. Peter in der Au (AT)
(74) Vertreter: Schonecke, Mitja

(57) **Zusammenfassung**

Die Erfindung betrifft eine Lageranordnung (1) umfassend ein Wälzlager (2), wobei das Wälzlager (2) mindestens einen Lagerinnenring (3) und mindestens einen Lageraußenring (4) aufweist, wobei zwischen dem Lagerinnenring (3) und dem Lageraußenring (4) Wälzkörper (5) angeordnet sind, wobei die Wälzkörper (5) von einem Käfig (6) gehalten werden und wobei Mittel (7) vorhanden sind, mit denen bei der Rotation mindestens eines Lagerrings des Wälzlagers (2) ein Ölnebel erzeugt werden kann. Um in einfacher und effizienter Weise einen Ölnebel in der Lageranordnung zu erzeugen, sieht die Erfindung vor, dass die Mittel (7) zur Erzeugung eines Ölnebels durch mindestens einen am Käfig (6) angeordneten Abschnitt (8) gebildet werden, der in Schmieröl (9) eintaucht, das in die Lageranordnung (1) eingefüllt ist.

## Beschreibung

Die Erfindung betrifft eine Lageranordnung umfassend ein Wälzlager, wobei das Wälzlager mindestens einen Lagerinnenring und mindestens einen Lageraußenring aufweist, wobei zwischen dem Lagerinnenring und dem Lageraußenring Wälzkörper angeordnet sind, wobei die Wälzkörper von einem Käfig gehalten werden und wobei Mittel vorhanden sind, mit denen bei der Rotation mindestens eines Lagerrings des Wälzlagers ein Ölnebel erzeugt werden kann, wobei die Mittel zur Erzeugung eines Ölnebels durch mindestens einen am Käfig angeordneten Abschnitt gebildet werden, der in Schmieröl eintaucht, das in die Lageranordnung eingefüllt ist.

Eine Lageranordnung dieser Art ist aus der EP 0 564 873 A1 bekannt. Hier ist ein am Käfig ein Flügelrad angeordnet, das in Öl eintaucht und das Innere der Lageranordnung mit Öl bespritzt.

Eine Lageranordnung einer ähnlichen Art ist in der WO 2007/040427 A1 offenbart. Hier ist an einem Lagerring ein Ölnebel-erzeugendes Element angeordnet, das in ein Ölbad eintaucht. Bei der Rotation des Lagerrings verursacht das ins Öl eintauchende Element die Entstehung eines Ölnebels.

Ähnliche Lösungen zeigen die US 2 447 671, die EP 1 767 800 A1, die US 3 612631, die DE 16 00 331 A, die JP 11 125 260 A, die JP 2003 206 938 A, die US 3 759 592 A, die EP 0 802 339 A2, die DE 43 27 815 C2, die EP 1 832 765 A1 und die CH 122 137 A.

Durch den entstehenden Ölnebel kann eine optimale Schmierung des Wälzlagers erreicht werden, wodurch die Gebrauchsdauer des Lagers gesteigert werden kann.

Der Erfindung liegt die Aufgabe zugrunde, eine Lageranordnung der eingangs genannten Art so fortzubilden, dass es möglich ist, in einfacher und effizienter Weise den gewünschten Ölnebel in der Lageranordnung zu erzeugen. Dies soll insbesondere in kostengünstiger Weise möglich werden.

Die Lösung dieser Aufgabe durch die Erfindung ist dadurch gekennzeichnet, dass der Abschnitt im Radialschnitt eine rechteckige Kontur aufweist, wobei der Abschnitt als ringförmiger Körper ausgebildet ist und wobei der Abschnitt eine glatte Oberfläche mit einer Oberflächenrauigkeit von weniger als Rₐ = 7 µm hat.

Der Abschnitt ist bevorzugt als einstückig mit dem Käfig ausgebildetes Teil ausgebildet.

Der Abschnitt erstreckt sich bevorzugt in Richtung der Drehachse des Wälzlagers.

Der Abschnitt weist bevorzugt Kanten auf, die scharfkantig ausgebildet sind. Dies begünstigt eine turbulente Strömung, wenn der Abschnitt durch das Öl geführt wird.

Die Oberflächenrauigkeit des Abschnitts ist bevorzugt kleiner als Rₐ = 3,5 µm (Rₐ: Rautiefe). Die Oberflächenrauigkeit des Abschnitts ist indes bevorzugt größer als Rₐ = 0,5 µm, vorzugsweise größer als Rₐ = 0,8 µm.

Die Eintauchtiefe des Abschnitts in das Schmieröl beträgt bevorzugt mindestens 3 mm, insbesondere mindestens 5 mm. Vorteilhaft ist es, wenn eine möglichst große Eintauchtiefe des Abschnitts am Käfig in das Ölreservoir erfolgt.

Die Ölnebelerzeugung wird begünstigt, wenn glatte Oberflächen am eintauchenden Abschnitt vorgesehen werden; Rippen sind möglichst zu vermeiden.

Der erfindungsgemäß ausgestaltete Käfig dient also als effizienter Ölnebelgenerator. Dieser Ölnebel wird kontinuierlich während des Betriebs der Lageranordnung erzeugt und stellt somit ständig eine optimale Schmierung zur Verfügung.

Die Größe des Öltanks ist indes von untergeordneter Bedeutung. Demgemäß ist der erfindungsgemäße Effekt bereits mit geringen Ölvolumina erreichbar.

Die selbstgenerierende Ölnebelschmierung wird also dadurch erzeugt, dass unterhalb des Lagers ein wannenähnliches Reservoir - bevorzugt in Form einer Ringwanne - ausgebildet ist; in dieses Reservoir wird das Schmieröl eingebracht. Das Ölreservoir kann durch ein Dichtungselement, z. B. durch einen Dichtungsring, gebildet werden.

Der untere Abschnitt des Käfigs taucht in das Ölbad ein, wobei ein Wirbel unterhalb der Ölbad-Oberfläche generiert wird. Als Anhaltswert für die Eintauchtiefe sind ca. 5 mm erkannt worden. Auch die Geometrie unterhalb der Badoberfläche ist wesentlich, da sich hier eine turbulente Strömung ausbilden kann und keine laminare Strömung vorherrscht. Bevorzugt ist diesbezüglich ein scharfkantiges Design, so dass damit turbulente Wirbelströmungen von den umlaufenden scharfkantigen Ecken abgehen können.

Bewährt haben sich Drehrautiefen von Rₐ = 0,8 mm bis 3,2 µm. Aber auch höhere Werte (bis Rₐ = 25 µm) sind tauglich. Wichtig ist, dass keine Aufmischung des Öls erfolgt; die Strömung sollte indes relativ ruhig bleiben. Dies wird auch durch den Umstand wesentlich begünstigt, dass der Käfig nicht mit Lagerringdrehzahl, sondern mit verminderter Drehzahl umläuft (insbesondere mit halber Lagerringdrehzahl). Demgemäß kann die Erzeugung der Ölnebelerzeugung besser gesteuert werden.

Das Anwendungsgebiet der vorgeschlagenen Erfindung ist breit. Beispielsweise hat sich die Erfindung in einem Separator (Lagerung der Welle des Separators) bewährt, der in der Lebensmittelindustrie eingesetzt wird. Genauso kommen beispielsweise Werkzeugmaschinen als Anwendungsfeld in Frage.

Das Lager kann grundsätzlich fettgeschmiert sein. Die Erstbefettung reicht üblicherweise für die ersten ca. tausend Betriebsstunden zur Lagerschmierung aus. Unabhängig von der Befettung arbeitet der interne Ölnebelgenerator und führt frischen Ölnebel zu der Lagerstelle, d. h. zu den Wälzkörpern. Bevorzugt wird dabei das Grundöl des Wälzlagerfetts als Öl verwendet.

Der Ölstand (in vertikaler Lage gesehen) wird so eingestellt, dass die Dichtlippenoberkante einer Abdichtung dabei nicht überfüllt wird und das Öl somit nicht überläuft. Die vorzugsweise zum Einsatz kommenden berührenden Dichtungen sind dabei so ausgelegt, dass diese bis zu Dichtlippengleitgeschwindigkeiten von 90 m/s berührend abdichten. Durch entsprechende Anordnung der Wälzlager können alle üblichen Ausführungen realisiert werden ("back-to-back"; "face-to-face"; "tandem").

Verwendet werden können alle Wälzlagerungen, auch beispielsweise Rillenkugellager.

Demgemäß wird mit der vorgeschlagenen Ausgestaltung eine Lageranordnung vorgeschlagen, die innerhalb des Lagers für einen wartungsfreien Betrieb sorgt, indem der benötigte Ölfilm ständig bereitgestellt wird.

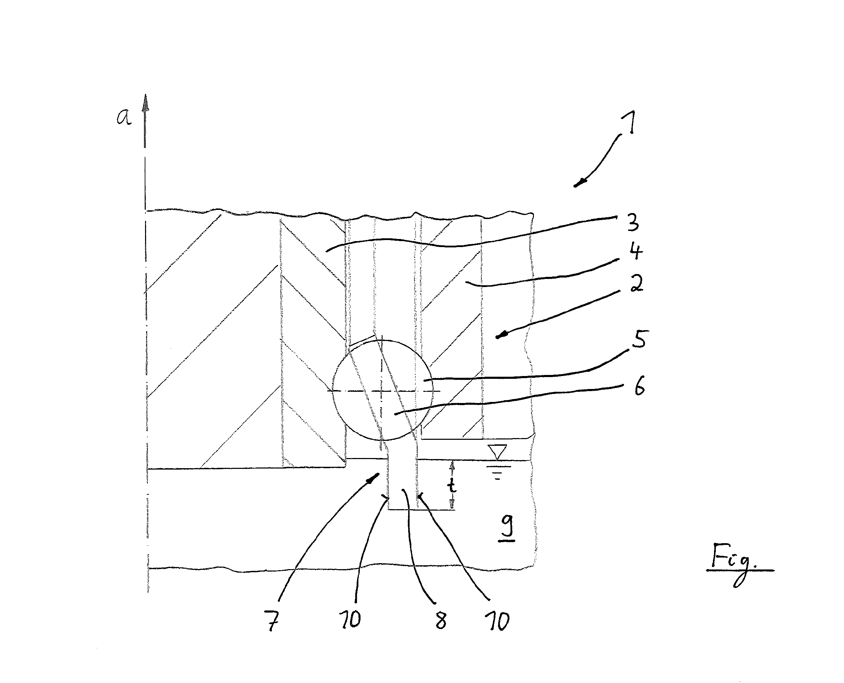

In der Zeichnung ist ein Ausführungsbeispiel der Erfindung dargestellt. Die einzige Figur zeigt den Radialschnitt durch einen Teil einer Lageranordnung.

In der Figur ist eine Lageranordnung 1 dargestellt, die ein Wälzlager 2 aufweist, das einen Lagerinnenring 3 und einen Lageraußenring 4 aufweist. Zwischen den Lagerringen 3, 4 sind in bekannter Weise Wälzkörper 5 angeordnet, die vorliegend Kugeln sind. Die Wälzkörper 5 sind durch einen Käfig 6 geführt.

Bei der Drehung des Wälzlagers 2 rotiert einer der Lagerringe um die Drehachse a. Diese ist vorliegend vertikal angeordnet.

Wesentlich ist, dass Mittel 7 vorhanden sind, mit denen im Betrieb der Lageranordnung 1, d. h. wenn einer der Lagerringe rotiert, ein Ölnebel erzeugt werden kann. Diese Mittel werden durch einen am Käfig 6 angeordneten Abschnitt 8 gebildet, der einstückig am Käfig 6 ausgeformt ist. Dieser Abschnitt 8, der eine ringförmige Gestalt aufweist, taucht mit einer Eintauchtiefe t in Schmieröl 9 ein, das in eine geeignete Vertiefung der Lageranordnung eingefüllt ist.

Der Abschnitt 8 ist mit scharfen Kanten 10 versehen, die sicherstellen, dass es hier zu einem Strömungsabriss kommt, wenn der Abschnitt 8 mit entsprechender Geschwindigkeit durch das Schmieröl 9 geführt wird. Demgemäß bildet sich eine turbulente Strömung im Schmieröl aus. Hierdurch wird der gewünschte und angestrebte Ölnebel gebildet.

### Bezugszeichenliste

- 1: Lageranordnung
- 2: Wälzlager
- 3: Lagerinnenring
- 4: Lageraußenring
- 5: Wälzkörper (Kugel)
- 6: Käfig
- 7: Mittel zur Erzeugung eines Ölnebels
- 8: Abschnitt
- 9: Schmieröl
- 10: Kante

- a: Drehachse des Wälzlagers
- t: Eintauchtiefe

## Patentansprüche

1. Lageranordnung (1) umfassend ein Wälzlager (2), wobei das Wälzlager (2) mindestens einen Lagerinnenring (3) und mindestens einen Lageraußenring (4) aufweist, wobei zwischen dem Lagerinnenring (3) und dem Lageraußenring (4) Wälzkörper (5) angeordnet sind, wobei die Wälzkörper (5) von einem Käfig (6) gehalten werden und wobei Mittel (7) vorhanden sind, mit denen bei der Rotation mindestens eines Lagerrings des Wälzlagers (2) ein Ölnebel erzeugt werden kann, wobei die Mittel (7) zur Erzeugung eines Ölnebels durch mindestens einen am Käfig (6) angeordneten Abschnitt (8) gebildet werden, der in Schmieröl (9) eintaucht, das in die Lageranordnung (1) eingefüllt ist, **dadurch gekennzeichnet, dass**
der Abschnitt (8) im Radialschnitt eine rechteckige Kontur aufweist, wobei der Abschnitt (8) als ringförmiger Körper ausgebildet ist und wobei der Abschnitt (8) eine glatte Oberfläche mit einer Oberflächenrauigkeit von weniger als Rₐ = 7 µm hat.

2. Lageranordnung nach Anspruch 1, **dadurch gekennzeichnet, dass** der Abschnitt (8) als einstückig mit dem Käfig (6) ausgebildetes Teil ausgebildet ist.

3. Lageranordnung nach Anspruch 1 oder 2, **dadurch gekennzeichnet, dass** sich der Abschnitt (8) in Richtung der Drehachse (a) des Wälzlagers (2) erstreckt.

4. Lageranordnung nach einer der Ansprüche 1 bis 3, **dadurch gekennzeichnet, dass** der Abschnitt (8) Kanten (10) aufweist, die scharfkantig ausgebildet sind.

5. Lageranordnung nach einem der Ansprüche 1 bis 4, **dadurch gekennzeichnet, dass** die Oberflächenrauigkeit des Abschnitts (8) kleiner ist als Rₐ = 3,5 µm.

6. Lageranordnung nach einem der Ansprüche 1 bis 5, **dadurch gekennzeichnet, dass** die Oberflächenrauigkeit des Abschnitts (8) größer ist als Rₐ = 0,5 µm, vorzugsweise größer ist als Rₐ = 0,8 µm.

7. Lageranordnung nach einem der Ansprüche 1 bis 6, **dadurch gekennzeichnet, dass** die Eintauchtiefe (t) des Abschnitts (8) in das Schmieröl (9) mindestens 3 mm beträgt, vorzugsweise mindestens 5 mm.
